# EUROPÄISCHE PATENTSCHRIFT

(11) **EP 2 947 115 B1**
(45) Veröffentlichungstag und Bekanntmachung des Hinweises auf die Patenterteilung: **17.04.2019**
(21) Anmeldenummer: 14169455.4
(22) Anmeldetag: 22.05.2014
(51) Int. Cl.: C08J 9/00, C08J 9/12, C08J 9/14, C08J 9/18, C08J 9/232, C08K 5/521, C08K 5/523, C08K 5/5357, C08K 3/04, C08K 5/00, C08K 5/32, C08K 5/3492, C08K 5/49

(54) **Halogenfreie Flammschutzmischungen für Polyolefinschaumstoffe**
Halogen-free flame-retardant mixtures for polyolefine foams
Mélanges ignifuges sans halogène pour polyoléfine en mousse

(43) Veröffentlichungstag der Anmeldung: 25.11.2015
(73) Patentinhaber: BASF SE, 67056 Ludwigshafen am Rhein (DE)
(72) Erfinder: Fuchs, Sabine, 33602 Bielefeld (DE); Keppeler, Uwe, 67126 Hochdorf-Assenheim (DE); Albert, Tim, 53332 Bornheim (DE)
(74) Vertreter: BASF IP Association

(56) Entgegenhaltungen:
- WO-A1-02/074847
- US-A1- 2003 220 422
- US-B2- 7 786 199

## Beschreibung

Die vorliegende Erfindung betrifft ein Verfahren zur Herstellung von Polyolefinschaumstoffpartikeln, umfassend die Schritte
(a) Bereitstellen von Granulaten aus einer Formmasse, enthaltend
a) 78 bis 98,9 Gew.-% mindestens eines Polyolefin P,
b) 1 bis 10 Gew.-% mindestens einer organischen Phosphorverbindung als Flammschutzmittel FR,
c) 0,1 bis 2 Gew.-% mindestens einer sterisch gehinderten Nitroxylverbindung als Flammschutzsynergisten S,
d) 0 bis 10 Gew.-% ein oder mehrerer Additive A,
wobei die Summe der Komponenten a) bis d) 100 Gew.-% ergeben,
(b) Herstellen einer wässrigen Suspension aus den Granulaten aus Stufe (a),
(c) Imprägnieren der Granulate mit mindestens einem flüchtigen Treibmittel in einem Kessel unter Druck,
(d) Entspannen der in Stufe (c) imprägnierten Granulate und Isolieren der Polyolefinschaumstoffpartikel,
sowie nach dem Verfahren erhältliche Polyolefinschaumstoffpartikel und Schaumstoffformteile.

Expandierte Polyolefin-Schaumstoffpartikel sind das Ausgangsmaterial für eine Vielzahl von Produkten in den Bereichen Automotive, Verpackungen, technische Teile, Sport & Freizeit etc. Insbesondere für den Einsatz in Bau und Transport müssen die Polyolefinschaumstoffe deutlich flammhemmende Eigenschaften aufweisen. Zur flammhemmenden Ausrüstung der Polyolefin-Schaumstoffpartikel kommen hier u. a. halogenierte Flammschutzmittel, häufig in Kombination mit Antimontrioxid als Synergist, zum Einsatz (z. B.: JP-A-7-309967 oder JP-A-10-147661).

US 5,393,812 und EP 1 239 005 A1 beschreiben Polyolefinzusammensetzungen, die ein bromiertes Phosphat, z. B Tris(tribromoneopentyl)phosphat oder Phosphonatester als Flammschutzmittel und ein sterisch gehindertes Amin als Lichtstabilisatoren enthalten.

Durch die häufig nötigen hohen Einsatzmengen und zum Teil starken Weichmachereigenschaften der halogenierten Flammschutzmittel sind die resultierenden Schaumstoffe häufig stark in Ihren mechanischen und Verarbeitungseigenschaften beeinträchtigt.

Es ist bekannt, Triazine oder sterisch gehinderte Amine zur thermischen Stabilisierung in Polyolefinzusammensetzungen (EP 0 889 085 A2), zur Verringerung der Schwankungen der Zelldurchmesser (EP 1 441 002 A1) oder als Flammschutzmittelkomponente (EP1 452 559 und EP 1 454 947) in Polyolefinschaumstoffen einzusetzen.

Der Einsatz von höheren Mengen an sterisch gehinderten Aminen kann im Brandfalle zu einem brennenden Abtropfen der Polymerschmelze führen, was zur Folge hat, dass wichtige Brandtests (z. B. B2 nach DIN 4102, UL94 HF-1) nicht bestanden werden.

In der EP 2 420 533 A1 ist die Verwendung von sterisch gehinderten Aminethern allein und in Kombination mit kondensierten organischen Phosphorsäureestern zum Einsatz als Flammschutzsystem in prä-expandierten Polyolefin-Partikeln und Polyolefinschaumstoffen beschrieben. Die in den Beispielen verwendeten hohen Anteile an sterisch gehinderten Aminethern führen in der Regel zu verschlechterten Produkt- oder Verarbeitungseigenschaften.

Die WO2010/026230 A1 beschreibt synergistische Flammschutzmittelgemische aus zwei oder mehreren Phosphonatverbindungen oder Phosphonsäurederivaten und sterich gehinderten Aminen für Polymere, insbesondere Polyethylenfolien, zur Verhinderung des Abtropfens im Brandfalle.

Normalerweise sind mit sterisch gehinderten Aminen additivierte Polyolefin-Formulierungen in ihrem Brandverhalten nur dann ausreichend gut flammgehemmt, wenn das Material in dünnen Schichten, beispielsweise Folien, verarbeitet und eingesetzt wird. Für Schaumstoffe oder dicke Schichten ist der erreichte flammhemmende Effekt für das Bestehen der klassischen Brandprüfungen (z. B. UL-94, B2 nach DIN4102, etc.) normalerweise nicht ausreichend.

Aufgabe der vorliegenden Erfindung war es, ein Verfahren zur Herstellung von Polyolefinschaumstoffpartikeln unter Verwendung einer halogenfrei flammgeschützten Formmasse bereitzustellen, die bei in geringen Mengen zugesetzten Flammschutzmitteln einen ausreichenden Flammschutz in Polyolefinschaumstoffen gewährleistet, im Brandfalle kein brennendes Abtropfen zeigt und insbesondere die mechanischen Eigenschaften nicht wesentlich verändert.

Die Aufgabe wurde durch das oben genannte Verfahren gelöst.

Bevorzugt enthält die in dem erfindungsgemäßen Verfahren eingesetzte Formmasse
a) 83,5 bis 97 Gew.-% mindestens eines Polyolefin P,
b) 2,5 bis 5 Gew.-% mindestens einer organischen Phosphorverbindung als Flammschutzmittel FR,
c) 0,5 bis 1,5 Gew.-% mindestens einer sterisch gehinderten Nitroxylverbindung als Flammschutzsynergisten S,
d) 0 bis 10 Gew.-% ein oder mehrerer Additive A,
wobei die Summe der Komponenten a) bis d) 100 Gew.-% ergeben.

Es wurde gefunden, dass durch den Einsatz geringer Mengen eines halogenfreien Flammschutzsystems bestehend aus einer organischen Phosphorverbindung, bevorzugt einem Organo-Phosphat bzw. Phosphonat-/Phosphinat-Salzen und einer sterisch gehinderten NitroxylVerbindung überraschenderweise Polyolefin-Schaumstoffe mit hervorragenden flammhemmenden Eigenschaften erhalten werden können.

Als Polyolefin P eignen sich beispielsweise
a) Homopolypropylen,
b) Randomcopolymere des Propylens mit 0,1 bis 15 Gew.-%, bevorzugt 0,5 bis 12 Gew.-%, eines Comonomeren. Bevorzugte Comonomere sind Ethylen, Styrol, Diene wie Butadien oder ein C4-10-alpha-Olefin oder deren Mischungen. Besonders bevorzugte Randomcopolymere sind Copolymere von Propylen mit 0,5 bis 6 Gew.-% Ethylen oder mit 0,5 bis 15 Gew.-% 1-Buten, oder ein Terpolymer aus Propylen, 0,5 bis 6 Gew.-% Ethylen und 0,5 bis 6 Gew.-% 1-Buten, oder Copolymere aus Ethylen, Propylen und einem Dien,
c) Mischungen der unter a) oder b) genannten Polymere mit 0,1 bis 75 Gew.-%, bevorzugt 3 bis 50 Gew.-% eines Polyolefin-Elastomeren, z.B. eines Ethylen-Propylen-Blockcopolymeren mit 30 bis 70 Gew.-% Propylen,
d) Polyethylene, beispielsweise LD (low density), LLD (linear low density), MD (medium density) oder HD (high density), HMW (high molecular weight) oder UHMW (ultra high molecular weight), oder
e) Mischungen der unter a) bis d) genannten Polymere, wobei gegebenenfalls Phasenvermittler mit verwendet werden, um die Phasenanbindung der in manchen Fällen unverträglichen Polymere zu verbessern.

Erfindungsgemäß einsetzbare Polyolefine P sind beispielsweise in EP 1 514 896 B1 genannt. In einer bevorzugten Ausführungsform des erfindungsgemäßen Verfahrens ist das wenigstens eine Polyolefin P ein Propylen-Ethylen-Random-Copolymer, wobei der Gehalt an Ethylen besonders bevorzugt 1 bis 5 Gew.-%, bezogen auf das gesamte Copolymer, beträgt.

Geeignet sind sowohl mit Ziegler- als auch mit Metallocen-Katalysatoren hergestellte Polyolefine.

Der Kristallitschmelzpunkt (DSC-Maximum) der erfindungsgemäß einsetzbaren Polyolefine P liegt im Allgemeinen zwischen 90 und 170 °C. Ihre Schmelzwärme, bestimmt nach der DSC-Methode, liegt vorzugsweise zwischen 20 und 300 J/g, der Schmelzindex MFI (230 °C, 2,16 kp für Propylenpolymerisate und 190 °C, 2,16 kp für Ethylenpolymerisate) nach DIN 53 735 liegt vorzugsweise bei 0,1 bis 100 g/10 min.

Die Polyolefine können mit bis zu 50 Gew.-% eines andersartigen Thermoplasten mit einer Glasübergangstemperatur (DSC-Wendepunkt) unterhalb von 180 °C abgemischt sein.

Es hat sich gezeigt, dass die Erfindung bevorzugt ohne Zumischen eines artfremden Thermoplasten durchgeführt wird. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

Bevorzugt werden Polyolefine P, welche als Homo- oder Copolymere aus den Monomeren Ethylen, Propylen, Buten-1 oder Isobuten aufgebaut sind, sowie Polyolefinderivate und - copolymerisate. Geeignete Polyolefine sind, Polypropylen-Homopolymerisate (PP) Polyethylen-Homopolymere, wie PE-LD (low density), PE-LLD (linear low density), PE-MD (medium density), PE-HD (high density), PE-HMW (high molecular weight), PE-UHMW) (ultra high molecular weight), Polyethylencopolymere, wie PE-ULD (Ultraleichtes Polyethylen), EVA (Ethylen Vinylacetat-Copolymer), EVAL (Ethylen/Vinylalkohol-Copolymer), Ethylen-Acryl-Copolymerisate oder Polypropylen-Copolymerisate aus Propylen und den Copolymeren Ethylen, Buten-1 und höhere an-Olefine. Besonders bevorzugt werden Propylen-Ethylen-Random-Copolymere verwendet.

Die Formmasse kann als Flammschutzmittel FR organische Phoshate, Phosphonate, Phosphinate, Phosphinoxide, Phosphine oder Phosphite enthalten. Geeignete Phosphate sind beispielsweise Resorcin-bis(diphenylphosphat) (FYROLFLEX® RDP), Bisphenol-A-bis(diphenylphosphat) (FYROLFLEX® BDP), Hydrochinon-bis(diphenylphosphat), Triphenylphosphate, Hydroxyalkylester auf Basis von Phosphorsäure, Ammonium polyphosphate (APP), Resorcin-bis(diphenylphosphat) als Oligomer (RDP), Phosphazen basierte Verbindungen, Ethylenediamine diphosphat (EDAP). Geeignete Phosphonate sind beispielsweise Alkylester der Methanphosphonsäure, Methanphosphonsäure-monomethylester-Aluminiumsalz, Diethyl-N,N-bis(2-hydroxyethyl)-aminomethylphosphonate, Melaminphenylphosphonat. Ein geeignete Phosphinate ist beispielsweise Melaminphenylphosphinat.. Geeignete Phosphite sind beispielsweise Aluminiumphosphit mit und ohne Kristallwasser, Metallsalze der Hypophosphorigen Säure, insbesondere Aluminumhypophosphit, und Melaminsalze von organischen Phosphorbasierten Säuren unterschiedlicher Oxidationsstufe. Bevorzugt enthält die erfindungsgemäße Formmasse als Flammschutzmittels FR ein organisches Phoshat, Phosphonat, Phosphinat, Phosphinoxid oder Phosphit.

Besonders bevorzugt wird als Flammschutzmittel FR ein Feststoff mit einem Schmelzpunkt oder, falls das Flammschutzmittel FR nicht unzersetzt schmilzt, mit einem Zersetzungspunkt von mindestens 150°C, besonders bevorzugt von mindestens 200°C. Solche Flammschutzmittel FR werden z.B. von der Firma Thor GmbH unter der Handelsbezeichnung Aflammit® PCO vertrieben. Geeignete Typen sind beispielsweise das PCO 900, das PCO 800 oder das PCO 700.
Der Schmelzpunkt kann mit den üblichen Methoden, beispielsweise in einer Apparatur nach Thiele, nach DAB, nach Linström, Kofler oder Tolotti mit ausreichender Genauigkeit bestimmt werden. Im praktischen Laborbetrieb finden meist automatische Schmelzpunktmessgeräte Verwendung. Besonders bevorzugt werden die Schmelz- oder Zersetzungspunkte durch Thermographimetrie (TG) oder Dynamische Differenzkalorimetrie (DSC) bestimmt.

Als Komponente c) enthält die Formmasse 0,1 bis 2 Gew.-%, bevorzugt 0,5 bis 1,5 Gew.-% mindestens einer sterisch gehinderten Nitroxylverbindung als Flammschutzsynergisten S.

Bevorzugt ist die sterisch gehinderte Nitroxylverbindung eine 1,3,5-Triazinverbindung oder ein Gemisch von zwei oder mehreren 1,3,5-Triazinverbindungen, ausgewählt aus Tris-2-hydroxyethylisocyanurat, Melamin, Melamincyanurat, Melaminphosphat, Poly-[2,4-(piperazin-1,4-yl)-6-(morpholin-4-yl)-1,3,5-triazin], Dimelaminphosphat, Melaminpyrophosphat, und gehinderten Aminverbindungen der Formeln I, II, IIA und III:

R₁NH-CH₂CH₂CH₂NR₂CH₂CH₂NR₃CH₂CH₂CH₂NHR₄ (I)

T-E₁-T₁ (II)

T-E₁ (IIA)

G-E₁-G₁-E₁-G₂ (III),

wobei in dem Tetraamin der Formel I
R₁ und R₂ die s-Triazineinheit E darstellen, und einer von R₃ und R₄ die s-Triazineinheit E darstellt, wobei der andere von R₃ und R₄ Wasserstoff darstellt, 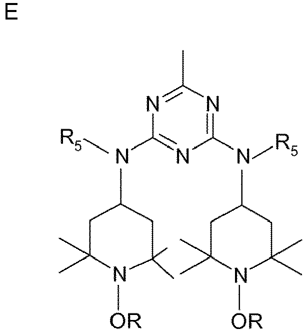 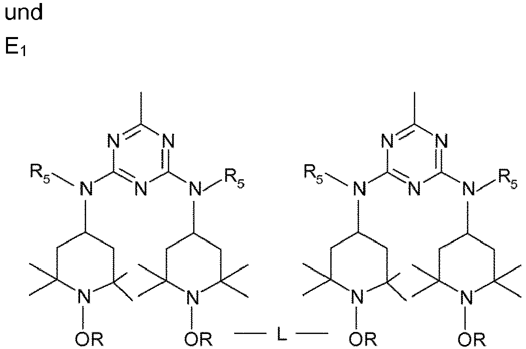 darstellt,
- R: Methyl, Cyclohexyl oder Octyl darstellt,
- R₅: Alkyl mit 1 bis 12 Kohlenstoffatomen, bevorzugt n-Butyl, darstellt,
- L: Propandiyl, Cyclohexandiyl oder Octandiyl darstellt;
worin in der Verbindung der Formel II oder IIA, wenn R Cyclohexyl oder Octyl darstellt, T und T₁ jeweils ein Tetraamin substituiert mit R₁ - R₄ wie für Formel I definiert, darstellen, worin
(1) eine von den s-Triazineinheiten E in jedem Tetraamin durch die Gruppe E₁ ersetzt ist, die eine Brücke zwischen zwei Tetraaminen T und T₁ bildet, oder
(2) die Gruppe E₁ beide Enden im gleichen Tetraamin T aufweisen kann wie in der Formel IIA, bei der zwei der E-Reste des Tetraamins durch eine E₁-Gruppe ersetzt sind, oder
(3) sämtliche drei s-Triazinsubstituenten des Tetraamins T E₁ bedeuten können, so dass ein Rest E₁ die Verbindung zwischen T und T₁ herstellt und der zweite Rest E₁ beide Enden im Tetraamin T aufweist,
worin in der Verbindung der Formel III
G, G₁ und G₂ jeweils Tetraamine, substituiert mit R₁ - R₄ wie für Formel I definiert, darstellen, mit der Ausnahme, dass G und G₂ jeweils eine von den s-Triazineinheiten E,
ersetzt durch E₁, aufweisen und G₁ zwei von den Triazineinheiten E, ersetzt durch E₁, aufweisen, so dass es eine Brücke zwischen G und G₁ und eine zweite Brücke zwischen G₁ und G₂ gibt.

Besonders bevorzugt ist der Flammschutzsynergist S ein Gemisch von N,N',N"'-Tris{2,4-bis[(1-kohlenwasserstoffoxy-2,2,6,6-tetramethylpiperidin-4-yl)alkylamino]-s-triazin-6-yl}-3,3'-ethylendiiminodipropylamin; N,N',N"-Tris{2,4-bis[(1-kohlenwasserstoffoxy-2,2,6,6-tetramethylpiperidin-4-yl)alkylamino]-s-triazin-6-yl}-3,3'-ethylendiiminodipropylamin und verbrückten Derivaten, wie durch die Formeln I, II, IIA und III beschrieben.

Die sterisch gehinderten Nitroxylverbindungen können beispielsweise wie in EP-A 0 889 085 beschrieben, hergestellt werden.

Besonders bevorzugt enthält die Formmasse als Flammschutzsynergist S ein Reaktionsprodukt aus 2,4-bis[(1-cyclohexyloxy-2,2,6,6-piperidin-4-yl)butylamino]-6-chloro-s-triazine mit N,N'-bis (3-aminopropyl)ethylendiamine.

Der Flammschutzsynergist ist bevorzugt weitgehend homogen in der Formmasse verteilt, was beispielsweise durch Zumischung bei der Extrusion oder durch statische oder dynamische Mischer (z. B. Kneter) erreicht werden kann.

Das Gewichtsverhältnis von Flammschutzmittel FR zu Synergist S liegt in der erfindungsgemäßen Formmasse bevorzugt im Bereich von 1:1 bis 10:1, besonders bevorzugt im Bereich von 2,5 : 1 bis 5 : 1.

Als weitere Additive A kommen übliche Zusatzstoffe, wie Antioxidantien, Stabilisatoren, Wachse, Füllstoffe, Pigmente und Farbstoffe, halogenierte Flammschutzmittel, UV- und Wärmestabilisatoren, Ruß- bzw. Graphit, Verarbeitungshilfsmittel in üblichen Mengen in Betracht (z. B.: Plastics Additives Handbook, Ed. by H. Zweifel, 5th Ed., Hanser Publ., Munich 2001, pp. 681-698). Geeignete Additive sind dem Fachmann an sich bekannt und beispielsweise in EP 1 514 896 A1 genannt. Die erfindungsgemäße Formmasse enthält vorzugsweise 0,001 bis 10,0 %, besonders bevorzugt 0,01 bis 1,0 %, ganz besonders bevorzugt 0,02 bis 0,06 %, beispielsweise 0,04 bis 0,06 %, bezogen auf das Granulat, wenigstens eines Nukleierungsmittels. Geeignet sind z. B. Talkum, Paraffine und/oder Wachse sowie Ruß, Graphit und pyrogene Kieselsäuren, ferner natürliche oder synthetische Zeolithe und, gegebenenfalls modifizierte, Bentonite, besonders bevorzugt Talkum. Sie bewirken, dass ein feinzelliger Schaumstoff entsteht, in manchen Fällen ermöglichen sie überhaupt erst das Schäumen. Besonders bevorzugt enthält die erfindungsgemäße Formmasse 0,1 bis 5 Gew.-% Ruß und/oder Graphit als Additiv A.

Geeignete halogenierte Flammschutzmittel sind beispielsweise organische Bromverbindung, wie Decabromodiphenyloxid, Tris(tribromneopentyl)phosphat (FR-370), Tris(2,3-dibrompropyl)phosphat, Tetrabromphthalsäure, Bis(2,3-dibrompropylether) von Tetrabromobisphenol-A (FR-720), bromierte Epoxidharze, 1,2-Ethylen-bis(tetrabromphthalimid) (BT-93), 1,2-Bis(tribromphenoxy)ethan, Decabromodiphenylethan (FR-1410), Tetrabrom-bisphenol A , 1,2-Ethylen bis-(dibromnorbornan-dicarboximid), Tris-(2,3-dibromopropyl)-isocyanurate, Tris(tribromphenoxy)triazin (FR-245), Melamin hydrobromid, Bromiertes Polystyrol (Saytex® 7010, FR-803P), bromierte Styrol-Butadien-Blockcopolymere (Emerald® 3000) oder Poly-(pentabrombenzyl-acrylate) (FR-1025). Vorzugsweise enthält die erfindungsgemäße Formmasse jedoch keine oder nur geringe Mengen an halogenierten Flammschutzmitteln.

Die erfindungsgemäß eingesetzte Formmasse kann nach bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt oder als Konzentrat der Formmasse zugesetzt und danach die restlichen Ausgangsstoffe einzeln und/oder ebenfalls gemischt hinzugegeben werden. Die Mischtemperaturen liegen in der Regel zwischen 180 bis 320°C. Geeignete Extruder sind beispielsweise beschrieben in: Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7).

Die Einarbeitung der Flammschutzmittel FR, Synergisten S und Additive A in die Polyolefine P erfolgt bevorzugt durch Zugabe zu einer Polymerschmelze und Mischen in einem Extruder. Nach einer weiteren bevorzugten Arbeitsweise können die Flammschutzkomponenten mit einem Polymeren gemischt, konfektioniert und granuliert werden. Das erhaltene Granulat kann anschließend als gut dosierbares Konzentrat (Masterbatch) verwendet werden

Die erfindungsgemäß eingesetzte Formmasse zeichnet sich durch eine gute Flammwidrigkeit aus und eignet sich zur Herstellung von Schaumstoffen.

Die Herstellung der erfindungsgemäß eingesetzten Formmasse erfolgt nach den üblichen dem Fachmann bekannten Verfahren, vorzugsweise durch Extrusion.

Die Herstellung der Polymerfilme mit Dicken unter 150 µm kann ebenfalls nach dem üblichen dem Fachmann bekannten Verfahren erfolgen, entweder durch Extrusion direkt in einem Schritt nach der Compoundierung oder in einem zweiten Schritt nach der Herstellung des Compounds als Granulat (z.B. Blasformen, Kalandrieren, Pressen oder Gießen).

Gegenstand der Erfindung ist auch die Verwendung der Formmasse zur Herstellung von Schaumstoffen sowie Schaumstoffen mit Zellwänden oder Zellstegen aus der oben beschriebenen Formmasse.

Expandierte Schaumstoffpartikel können beispielsweise durch Imprägnierung von Granulaten mit einem Treibmittel in wässriger Suspension in einem Druckkessel und anschließendem Entspannen erhalten werden. Bevorzugt beträgt die Schüttdichte auf diese Weise erhältlichen, expandierten Partikel 10 bis 300 kg/m³. Die Schaumstoffpartikel können anschließend in einer Form zu Schaumstoffformteilen verschweißt werden.

Das erfindungsgemäße Verfahren zur Herstellung von Polyolefinschaumstoffpartikeln, umfasst die Schritte:
(a) Bereitstellen von Granulaten aus der erfindungsgemäß eingesetzten Formmasse,
(b) Herstellung einer vorzugsweise wässrigen Suspension aus den Granulaten aus Stufe (a),
(c) Imprägnieren der Granulate mit mindestens einem flüchtigen Treibmittel in einem Kessel unter Druck,
(d) Entspannen der in Stufe (c) imprägnierten Granulate und Isolieren der Polyolefinschaumstoffpartikel.

Die einzelnen Schritte (a) bis (d) des erfindungsgemäßen Verfahrens werden im Folgenden detailliert beschrieben.

### Schritt (a)

In Schritt (a) werden Granulate aus der erfindungsgemäß eingesetzten Formmasse bereitgestellt. Hierzu kann die Formmasse, wie oben beschrieben hergestellt und granuliert werden. Durch Stranggranulation können zylinderförmige Granulate, durch Unterwasserdruckgranulierung (UWG) nahezu kugelförmige Granulate erhalten werden. Die kompakten, ungeschäumten Granulate werden in der Regel als Minigranulat bezeichnet und in den nachfolgenden Stufen imprägniert und zu Polyolefinschaumstoffpartikeln entspannt.

Dieses Polyolefingranulat weist vorzugsweise mittlere Durchmesser von 0,2 bis 10 mm, insbesondere von 0,5 bis 5 mm auf. Dieses bevorzugt zylinderförmige oder runde Granulat kann durch alle dem Fachmann bekannte Verfahren hergestellt werden, insbesondere durch Extrudieren des Polyolefins, gegebenenfalls zusammen mit dem zuzumischenden Thermoplasten und weiteren Zusatzstoffen, Auspressen aus dem Extruder, gegebenenfalls Abkühlen und Granulieren. Ein solches bevorzugt in Schritt (a) bereitgestellte Granulat wird auch "Minigranulat" genannt. Die einzelnen Partikel eines solchen Granulates haben im Allgemeinen ein Gewicht von 0,5 bis 10 mg/Partikel, bevorzugt 0,6 bis 1,4 mg/Partikel. Ein bevorzugtes Verfahren zur Herstellung dieses Granulates ist beispielsweise in EP 1 182 225 B1 beschrieben.

### Schritt (b):

Schritt (b) des erfindungsgemäßen Verfahrens umfasst das Herstellen einer Suspension enthaltend das Granulat aus der erfindungsgemäß eingesetzten Formmasse in einem Suspendiermedium.

Das Granulat wird in Schritt (b) des erfindungsgemäßen Verfahrens in einem geeigneten Suspendiermedium suspendiert. Im Allgemeinen sind alle dem Fachmann als geeignet bekannten Suspendiermedien verwendbar, bei denen gewährleistet ist, dass sich das eingesetzte Granulat darin nicht löst. Erfindungsgemäß besonders geeignete Suspendiermedien sind beispielsweise Wasser, polare organische Lösungsmittel, beispielsweise Alkohole wie Methanol, Ethanol, Propanole wie iso-Propanol, Glycerin, Ethylenglycol, oder Ketone, wie Aceton, oder Mischungen davon. Bevorzugt wird in Schritt (b) des erfindungsgemäßen Verfahrens als Suspendiermedium eine Mischung von Wasser und Ethanol, beispielsweise 70 bis 90 Gew.-% Wasser und 10 bis 30 Gew.-% Ethanol, oder Wasser, besonders bevorzugt Wasser, verwendet.

Die Menge an Suspendiermedium, besonders bevorzugt Wasser, in der Suspension wird im Allgemeinen so gewählt, dass das Phasenverhältnis von in Schritt (b) eingesetztem Granulat zu Suspendiermedium > 0,2, bevorzugt > 0,35, beträgt. Das Phasenverhältnis von in Schritt (b) eingesetztem Granulat zu Suspendiermedium beträgt im Allgemeinen < 0,90, bevorzugt < 0,80, besonders bevorzugt < 0,70.

Das Phasenverhältnis betrifft das Verhältnis von Granulat, gemessen in Kilogramm, zu Suspendiermedium, welches bevorzugt Wasser ist, ebenfalls in Kilogramm. Dem Fachmann ist bekannt, wie das erfindungsgemäße Verhältnis eingestellt werden kann, beispielsweise beträgt bei 500 kg Granulat in 1000 kg Wasser das Phasenverhältnis Granulat zu Wasser 0,5.

Die Menge an Granulat enthaltend mindestens ein Polyolefin, welches in die Suspension gemäß Schritt (b) eingebracht wird, ergibt sich aus dem oben beschriebenen Phasenverhältnis von Granulat zu Suspendiermedium.

Bevorzugt wird das Granulat enthaltend mindestens ein Polyolefin in einem Rührreaktor in Wasser suspendiert. Dabei werden bevorzugt mindestens ein Suspendierhilfsmittel zugesetzt, um eine gleichmäßige Verteilung des Granulates im Suspendiermedium zu gewährleisten. Geeignete Suspendierhilfsmittel sind wasserunlösliche anorganische Stabilisatoren, wie Tricalciumphosphat, Magnesiumpyrophosphat, Metallcarbonate, ferner Polyvinylalkohol und Tenside, wie Natriumdodecyl-arylsulfonat. Diese Suspendierhilfsmittel, insbesondere die genannten Polyolefinpartikel II, mit einem Antistatikum versehen werden. Dies geschieht in einer bevorzugten Ausführungsform durch Beschichten.

Aus den expandierten Polyolefinpartikeln I oder II kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 8 bis 300 kg/m³, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Ein bevorzugtes Verfahren zur Herstellung eines Schaumstoffformteils, umfassend wenigstens die Schritte
(i) Herstellen von expandierten Partikeln I und II nach dem oben genannten erfindungsgemäßen Verfahren und
(ii) Aufschäumen der Schaumstoffpartikel aus Schritt (i) in einer entsprechenden Form, um ein Formteil zu erhalten.

Bei diesem Verfahren werden in Schritt (i) zunächst expandierte Partikel gemäß den Schritten (a),(b), (c) und (d) wie oben beschrieben hergestellt. Optional können auch zusätzlich aus den expandierten Partikeln I die Partikel II durch Nachschäumen hergestellt werden. Das zu den Schritten (a) bis (d) Gesagte gilt daher entsprechend.

Schritt (ii) umfasst das Aufschäumen der expandierten Partikel aus Schritt (i) in einer entsprechenden Form, um ein Formteil zu erhalten.

In einer bevorzugten Ausführungsform wird Schritt (ii) beispielsweise durchgeführt, indem man die in Schritt (i) erhaltenen expandierten Partikel in einer geschlossenen Form unter Wärmeeinwirkung miteinander verschweißt. Dazu füllt man die Partikel bevorzugt in die Form und leitet nach Schließen der Form Wasserdampf oder Heißluft ein, wodurch die Partikel weiter expandieren und miteinander zum Formteil, vorzugsweise mit einer Dichte im Bereich von 8 bis 300 kg/m³, verschweißen. Das Verhältnis der Dichte des Formteils zu der Schüttdichte der expandierten Partikel beträgt dabei im Allgemeinen > 1,1.

In einer bevorzugten Ausführungsform werden die Formteile nach dem Fachmann bekannten Verfahren wie Druckfüllverfahren oder Kompressionsverfahren, dem Tauschkantenverfahren, bzw. Crack-Spalt-Verfahren oder nach vorheriger Druckbeladung, erhalten. Entsprechende Verfahren sind in DE-A 25 42 453 und EP-A-0 072 499 offenbart.

Der Reaktorinhalt wird im Allgemeinen auf eine Imprägniertemperatur von üblicherweise mindestens 100 °C erhitzt. Die Treibmittelzugabe kann dabei vor, während oder nach dem Aufheizen des Reaktorinhalts, bevorzugt vor dem Aufheizen, erfolgen. Die Imprägniertemperatur sollte in der Nähe der Erweichungstemperatur des Polyolefins liegen, beispielsweise 40 °C unter bis 25 °C über der Schmelztemperatur (Kristallitschmelzpunkt) des Polyolefins. Bei Polypropylen sind Imprägniertemperaturen von 110 bis 180 °C, insbesondere 130 bis 160 °C bevorzugt.

Je nach Menge und Art des Treibmittels sowie nach der Höhe der Temperatur stellt sich im verschlossenen Reaktor ein Druck (Imprägnierdruck) ein, der im Allgemeinen 2 bis 100 bar (absolut) beträgt. Erforderlichenfalls kann man den Druck durch ein Druckregelventil oder Nachpressen von Treibmittel regulieren. Durch die bei den Imprägnierbedingungen vorliegende erhöhte Temperatur und den Überdruck diffundiert Treibmittel in die Polymergranulatpartikel hinein. Die Imprägnierdauer beträgt im Allgemeinen 0,3 bis 10 Stunden.

Nach dem erfindungsgemäßen Schritt (c) wird ein mit Treibmittel beladenes Granulat in Suspension erhalten.

### Schritt (d)

Schritt (d) des erfindungsgemäßen Verfahrens umfasst das Entspannen und Abkühlen der in Schritt (c) erhaltenen Suspension durch Inkontaktbringen mit einem geeigneten Kühlmittel (Quenchprozess), um Schaumstoffpartikel zu erhalten. Ein geeigneter Quenchprozess ist beispielsweise in der EP 2336225 beschrieben, in der durch Zusatz einer bestimmten Menge Kühlmittel gequencht wird. Üblicherweise wird in Schritt (d) des erfindungsgemäßen Verfahrens die Suspension durch eine geeignete Vorrichtung entspannt. Bevorzugt verlässt die Suspension den Imprägnierkessel zunächst durch ein Ventil. Zur Beruhigung des Entspannungsstrahls und Ausbildung einer laminaren Strömung kann dieser anschließend bevorzugt durch ein kurzes Stück eines Entspannungsrohrs geführt werden, das am Ende eine Lochblende trägt. Durch Länge und Durchmesser des Entspannungsrohrs sowie Durchmesser der Lochblende kann die Entspannungszeit kontrolliert werden.

Man kann die Suspension unmittelbar auf Atmosphärendruck (1013 mbar) entspannen. Bevorzugt wird jedoch in einen Zwischenbehälter entspannt, dessen Druck zum Aufschäumen der Polyolefinpartikel ausreicht, jedoch über Atmosphärendruck liegen kann. Beispielsweise entspannt man auf einen Druck von z. B. 0,05 bis 0,5 MPa, insbesondere 0,1 bis 0,33 MPa (absolut). Während des Entspannens kann man im Imprägnierbehälter den Imprägnierdruck konstant halten, indem man Treibmittel nachpresst. Während des Entspannens dehnt sich das in dem Granulat enthaltene Treibmittel aus, so dass expandierte Partikel erhalten werden. Somit wird nach dem Entspannen eine Suspension von expandierten Partikeln erhalten.

Die expandierten Partikel können in üblicher Weise aus der Suspension abgetrennt werden, beispielsweise durch Filtrieren, beispielsweise mit einem Maschen- oder Bogensieb oder über eine kontinuierlich arbeitende Zentrifuge.

Des Weiteren kann gegebenenfalls vor oder nach dem Abtrennen noch anhaftendes Suspendier- und/oder Suspendierhilfsmittel entfernt werden. Die expandierten Polyolefinpartikel können anschließend gewaschen und getrocknet werden.

Die nach Schritt (d) des erfindungsgemäßen Verfahrens erhaltenen expandierten Polyolefinpartikel weisen bevorzugt eine Schüttdichte von 5 bis 300 kg/m³, besonders bevorzugt von 10 bis 200 kg/m³, beispielsweise 25 bis 40 kg/m³ auf.

In einer weiteren Ausführungsform des erfindungsgemäßen Verfahrens werden die in Schritt (d) erhaltenen expandierten Partikel (expandierte Partikel I) weiter aufgeschäumt, um expandierte Partikel II mit einer geringeren Schüttdichte zu erhalten. Dieser Schritt wird auch "Nachschäumen" genannt. Dieser Zusatzschritt wird insbesondere angewandt, um den Transport und Lagervorteil von Partikeln mit hohen Schüttdichten zu nutzen. Eine benötigte niedrige Schüttdichte kann dann erst bei Bedarf hergestellt werden.

Verfahren, um die in Schritt (d) des erfindungsgemäßen Verfahrens erhaltenen expandierten Partikel I weitere aufzuschäumen, sind dem Fachmann bekannt und werden beispielsweise in EP 1 533 335 B1 beschrieben.

Die Polyolefinpartikel, die in Schritt (d) erhalten werden d.h. als expandierte Polyolefinpartikel I, können gegebenenfalls vor dem Nachschäumen mit einem Antiverklebungsmittel versehen werden. Dies geschieht in einer bevorzugten Ausführungsform durch Beschichten. Typische Verklebungsmittel sind ebenfalls in der EP 1 533 335 B1 beschrieben.

Das Verhältnis von Schüttdichte der expandierten Partikel I zu der Schüttdichte der nachgeschäumten expandierten Partikel II, der so genannte Expandierfaktor, liegt besonders bevorzugt bei 1,2 bis 3.

Die erfindungsgemäß hergestellten expandierten Polyolefinpartikel (expandierte Partikel I oder II) weisen im Allgemeinen eine Zellzahl von 1 bis 500 Zellen/mm², vorzugsweise 2 bis 200 Zellen/mm², insbesondere 16 bis 100 Zellen/mm², auf.

Die expandierten Partikel I oder II sind in der Regel zumindest annähernd kugelförmig und weisen üblicherweise einen Durchmesser von 0,2 bis 20 mm, bevorzugt 0,5 bis 15 mm und insbesondere 1 bis 12 mm auf. Bei nicht kugelförmigen, z. B. länglichen oder zylinderförmigen Partikeln, ist mit Durchmesser die längste Abmessung gemeint.

Die vorliegende Anmeldung betrifft auch expandierte Partikel, herstellbar sowie bevorzugt hergestellt durch das erfindungsgemäße Verfahren.

Die Polyolefinpartikel können gegebenenfalls nach dem Verschäumen, d. h. als expandierte Polyolefinpartikel I, die in Schritt (d) erhalten werden und die daraus hergestellten expandierten Polyolefinpartikel II, mit einem Antistatikum versehen werden. Dies geschieht in einer bevorzugten Ausführungsform durch Beschichten.

Aus den expandierten Polyolefinpartikeln I oder II kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 8 bis 300 kg/m³, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Ein bevorzugtes Verfahren zur Herstellung eines Schaumstoffformteils, umfassend wenigstens die Schritte
(i) Herstellen von expandierten Partikeln I und II nach dem oben genannten erfindungsgemäßen Verfahren und
(ii) Aufschäumen der Schaumstoffpartikel aus Schritt (i) in einer entsprechenden Form, um ein Formteil zu erhalten.

Bei diesem Verfahren werden in Schritt (i) zunächst expandierte Partikel gemäß den Schritten (a),(b), (c) und (d) wie oben beschrieben hergestellt. Optional können auch zusätzlich aus den expandierten Partikeln I die Partikel II durch Nachschäumen hergestellt werden. Das zu den Schritten (a) bis (d) Gesagte gilt daher entsprechend.

Schritt (ii) umfasst das Aufschäumen der expandierten Partikel aus Schritt (i) in einer entsprechenden Form, um ein Formteil zu erhalten.

In einer bevorzugten Ausführungsform wird Schritt (ii) beispielsweise durchgeführt, indem man die in Schritt (i) erhaltenen expandierten Partikel in einer geschlossenen Form unter Wärmeeinwirkung miteinander verschweißt. Dazu füllt man die Partikel bevorzugt in die Form und leitet nach Schließen der Form Wasserdampf oder Heißluft ein, wodurch die Partikel weiter expandieren und miteinander zum Formteil, vorzugsweise mit einer Dichte im Bereich von 8 bis 300 kg/m³, verschweißen. Das Verhältnis der Dichte des Formteils zu der Schüttdichte der expandierten Partikel beträgt dabei im Allgemeinen > 1,1.

In einer bevorzugten Ausführungsform werden die Formteile nach dem Fachmann bekannten Verfahren wie Druckfüllverfahren oder Kompressionsverfahren, dem Tauschkantenverfahren, bzw. Crack-Spalt-Verfahren oder nach vorheriger Druckbeladung, erhalten. Entsprechende Verfahren sind in DE-A 25 42 453 und EP-A-0 072 499 offenbart.

Die erfindungsgemäße Formmasse zeichnet sich durch hervorragende flammhemmende Eigenschaften schon bei geringen Mengen, insbesondere zusammen mit organischen Phosphor-Die erfindungsgemäß verwendet Formmasse zeichnet sich durch hervorragende flammhemmende Eigenschaften schon bei geringen Mengen, insbesondere zusammen mit organischen Phosphorverbindungen aus. Die Verbindungen der Formel (I) eignen sich insbesondere für spritzgegossene Polyolefinformmassen und für dünne Polyolefinfolien oder Polyolefinschaumstoffe. Diese finden Verwendung als Folie, Verpackungsmaterial, zur Wärmedämmung, für Bauanwendungen, als Verpackung oder Gehäuse für Armaturen und Anlagen im Bereich Heizung, Sanitär und Lüftung, als Verbundformteil, in der Automobilindustrie, im Boots- und Schiffsbau oder in Windkraftanlagen.

### Beispiele

### Einsatzstoffe:

- PP:: Moplen RP320M, Polypropylen Random Copolymer von lyondellbasell mit einer Dichte von 0,900 g/cm3 und einer Schmelzefließrate (MFR 230°C/2,16 kg) von 8,0 g/10 min.

### Suspendierhilfsmittel

Calcilit 1 G (Calciumcarbonat) der Fa. Alpha Calcit Füllstoff GmbH & Co: KG Lutensol AT 25 der Fa. BASF SE, Ludwigshafen

**Tabelle 1: Bezeichnung und Struktur Flammschutzmittel FR1 - FR5**

| | | |
|---|---|---|
| 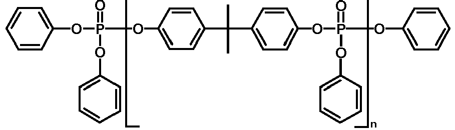 | Poly-[Bisphenol A-bis(diphenyl phosphate)] | FR1 |
| 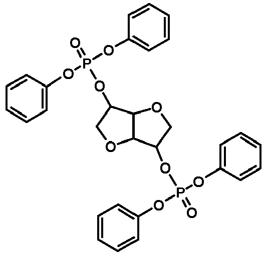 | Phosphorsäure-6-(diphenoxy-phosphoryloxi)-hexahydro-furo[3,2-b]-furan-3ylester diphenylester | FR2 |
| 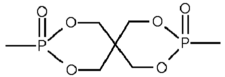 | 2,4,8,10-Tetraoxa-3,9-diphospha-spiro[5.5]undecane, 3,9-dimethyl-, 3,9-dioxide | FR3 |
| 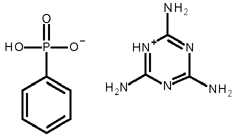 | Melaminphenylphosphonat | FR4 |
| 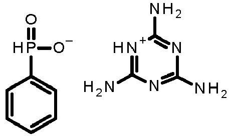 | Melaminphenylphosphinat | FR5 |

**Tabelle 2: Bezeichnung und Struktur Flammschutzsynergisten S1**

| | | |
|---|---|---|
| 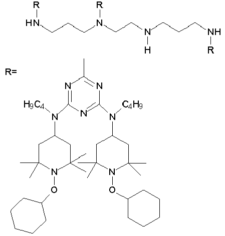 | Flamestab® NOR 116 | S1 |

Die in den Beispielen eingesetzten organischen Phosphorverbindungen und Synergisten wurden nach literaturbekannten Vorschriften synthetisiert oder kommerziell erworben:
FR1: Kommerziell erhältlich als Fyrolflex® BDP von der Firma ICL-IP Europe BV.
FR2: Synthetisiert nach WO2011/083009 A1.
FR3: Kommerziell erhältlich als Aflammit PCO 900 (Smp. 245°C) von der Thor GmbH.
FR4: Synthetisiert nach WO2010/063623 A1.
FR5: Synthetisiert nach WO2010/057851 A1.
S1: Kommerziell erhältlich als Flamestab® NOR 116 FF von der BASF SE.

Zur Charakterisierung der verwendeten Rohstoffe, sowie der resultierenden Polymerschichten, Schaumstoffpartikel bzw. Formteile wurden u.a. folgende Prüfmethoden bzw. Kennwerte verwendet:

### Schmelzpunktbestimmung mittels DSC:

Durchführung nach ISO 11357-3 (Deutsche Fassung vom 01.04.2013) mit DSC Q100 der Fa. TA Instruments. Zur Bestimmung des Schmelzpunktes des eingesetzten Polyolefins oder an der anderen mögliche Termoplasten in Granulatform wurden 3 -5 mg in einem 1. Lauf zwischen 20°C und 200°C mit einer Aufheizrate von 20°C/min aufgeheizt, anschließend mit 10°C/min auf 20°C abgekühlt, gefolgt durch einen weiteren Aufheizzyklus (2. Lauf) mit einer Aufheizrate von 10°C/min. Als Schmelzpunkt wurde die Temperatur des Peakmaximums im 2. Lauf angegeben. Zur Charakterisierung der kristallinen Struktur der expandierten Schaumstoffpartikel werden 3 - 5 mg zwischen 20°C und 200°C mit einer Aufheizrate von 20°C/min aufgeheizt und der resultierende Wärmestrom bestimmt.

### Verdichtungsgrad VG

Der Verdichtungsgrad VG ist das Verhältnis von Formteildichte (FT-Dichte) zu Schüttdichte (SD). VG = FT-Dichte [kg/m³] / SD [kg/m³]

### Flammwidrigkeit:

Die Flammwidrigkeit von Folien bzw.von mehrlagigen Folienkörpern erfolgte in einem Kleinbrennertest analog DIN 4102. Hierzu wurde das erfindungsgemäße bzw. als Vergleichsbeispiel verwendete Compound, vorliegend als Strang, Granulat oder Minigranulat an einer hydraulischen Laborhandpresse PW 40 (Firma Weber, 73630 Remshalden) bei 170°C zu Folien mit Dicken von 100 - 150 µm verpresst. Die Folien wurden anschließend zu mehrlagigen Folienbällen mit einem Durchmesser von ca. 5 cm geformt. Die Beurteilung des Brandverhaltens bei einer Beflammungszeit von drei Sekunden erfolgt durch die Einstufung "brennt ab" bzw. "selbstverlöschend", bei gleichzeitiger Dokumentation der Nachbrennzeiten (in Sekunden nach Ende der Beflammung).

Die Flammwidrigkeit der Schaumstoff-Formteile wurde nach der Methode UL94-HBF (Underwriters Laboratories Inc. Standard of Safety, "Test for Flammability of Plastic Materials for Parts in Devices and Appliances", S. 28-33, Northbrook, 1996) bestimmt.

### Beispiele 1 - 8 und Vergleichsversuche V1 - V19:

Herstellung und Brandverhalten von mehrlagigen Folienkörpern (Folienbällen)

Polypropylen Moplen RP320M wurde in einem DSM Extruder (DSM Micro 15) aufgeschmolzen, und Flammschutzmittel (FR) und Flammschutzsynergist (S) bei einer Schmelzetemperatur von 210 °C über 5 min. homogen eingearbeitet. Art und Menge des Flammschutzmittels und Synergisten, in Gewichtsprozent bezogen auf die flammgeschützte Polypropylenschmelze, sind in Tabelle 3 zusammengestellt.

**Tabelle 3: Zusammensetzung und Brandverhalten der Beispiele 1 - 14 und Vergleichsversuche V1 -V25**

| Bsp. | Flammschutzmittel (Gew.-%) | Synergist (Gew.-%) | Brandtest / Nachbrennzeit (s) |
|---|---|---|---|
| V1 | - | - | brennt ab / > 20 |
| V2 | 5,0 FR1 | - | brennt ab / > 20 |
| V3 | 8,0 FR1 | - | brennt ab / > 20 |
| V7 | 5,0 FR2 | - | brennt ab / > 20 |
| V8 | 8,0 FR2 | - | brennt ab / > 20 |
| V9 | 5,0 FR3 | - | brennt ab / > 20 |
| V10 | 8,0 FR3 | - | brennt ab / > 20 |
| V11 | - | 0,5 S1 | brennt ab / > 20 |
| V12 | - | 1,0 S1 | brennt ab / > 20 |
| V13 | - | 4,0 S1 | brennt ab / > 20 |
| V14 | - | 5,0 S1 | brennt ab / > 20 |
| V15 | - | 6,0 S1 | brennt ab / > 20 |
| V16 | 5,0 FR2 | 5,0 S1 | brennt ab / > 20 |
| V17 | 5,0 FR3 | 5,0 S1 | brennt ab / > 20 |
| V18 | 5,0 FR4 | 5,0 S1 | brennt ab / > 20 |
| V19 | 5,0 FR5 | 5,0 S1 | brennt ab / > 20 |
| 1 | 2,5 FR2 | 1,0 S1 | selbstverlöschend / 5 |
| 2 | 5,0 FR2 | 1,0 S1 | selbstverlöschend / 3 |
| 3 | 2,5 FR3 | 1,0 S1 | selbstverlöschend / 3 |
| 4 | 5,0 FR3 | 1,0 S1 | selbstverlöschend / 1 |
| 5 | 2,5 FR4 | 1,0 S1 | selbstverlöschend / 9 |
| 6 | 5,0 FR4 | 1,0 S1 | selbstverlöschend / 8 |
| 7 | 2,5 FR5 | 1,0 S1 | selbstverlöschend / 2 |
| 8 | 5,0 FR5 | 1,0 S1 | selbstverlöschend / 3 |

### Beispiels 9 - 11 und Vergleichsversuch 20:

Herstellung von Polypropylenschaumstoffpartikeln (Schritte (b) bis (d))

### Allgemeine Versuchsbeschreibung

Es wurde Minigranulat MG1 bis MG4 mit einem Partikelgewicht von ca.1 mg eingesetzt, dessen Zusammensetzung in Tabelle 4 beschrieben ist. Die Versuche wurden mit einem Kesselfüllgrad von 80 % und einem Phasenverhältnis von 0,40 durchgeführt.

100 Gewichtsteile (entsprechend 28,2 Gew.-%, bezogen auf die gesamte Suspension ohne Treibmittel) des Minigranulats, 248 Gewichtsteile (entsprechend 69,9 Gew.-%, bezogen auf die gesamte Suspension ohne Treibmittel) Wasser, 6,6 Gewichtsteile (entsprechend 1,86 Gew.-%, bezogen auf die gesamte Suspension ohne Treibmittel) Calciumcarbonat 0,14 Gewichtsteile (entsprechend 0,008 Gew.-%, bezogen auf die gesamte Suspension ohne Treibmittel) einer oberflächenaktiven Substanz (Lutensol AT 25) und die entsprechende Menge Treibmittel (bezogen auf die eingesetzte Granulatmenge) wurden unter Rühren erhitzt. Dann wurde bei 50°C der Flüssigphase zusätzlich Stickstoff aufgepresst und der Innendruck auf einen vorher definierten Druck (z. B. 8 bar) eingestellt. Anschließend wird bei Erreichen der Imprägniertemperatur (IMT) über eine Entspannungsvorrichtung entspannt. Die verwendete Butanmenge, die IMT und die resultierende Schüttdichte (SD) sind in Tabelle 5 aufgeführt

### Herstellung der Schaumstoffformteile (Schritte (i) bis (ii)

Die Herstellung der Formteile erfolgte auf einem handelsüblichen EPP-Formteilautomaten (Typ EHV-C-PP 870/670 der Fa. Erlenbach GmbH). Es wurde mit Werkzeugen der Maße 300*200*60 mm quaderförmige Prüfkörper hergestellt. Die Formteile mit 60 mm Dicke wurden nach dem Druckfüllverfahren hergestellt. Je nach der gewünschten Formteildichte (Staudruck üblicherweise zwischen x und y bar) liegen die verwendeten Dampfdrücke üblicherweise im Bereich 1,5 - 3,6 bar.
Nach der Herstellung wurden die Formteile 16 h bei 80°C gelagert.

Die Ergebnisse der Brandprüfung an Proben aus diesen Formteilen sind in Tabelle 6 aufgeführt.

**Tabelle 4: Zusammensetzung der Minigranulate MG1 - MG4, Angaben in Gew.-% bezogen auf MG**

| | PP | Graphit | Additive | FSM | | Synergist | |
|---|---|---|---|---|---|---|---|
| MG1 | 92,0 | 2,0 | 1,0 | FR2 | 4,0 | S1 | 1,0 |
| MG2 | 93,5 | 2,0 | 1,0 | FR2 | 2,5 | S1 | 1,0 |
| MG3 | 85,3 | 2,0 | 1,0 | FR3 | 7,8 | S1 | 1,0 |
| MG4 | 89,2 | 2,0 | 1,0 | FR3 | 7,8 | S1 | 0,0 |

**Tabelle 5: Imprägnierbedingungen**

| Beispiel | | Butan [%] | IMT [°C] | SD [kg/m³] |
|---|---|---|---|---|
| 9 | MG1 | 12 | 133,2 | 29,4 |
| 10 | MG2 | 12 | 133,4 | 32,2 |
| 11 | MG3 | 16 | 128,0 | 32,0 |
| V20 | MG4 | 16 | 128,0 | 31,0 |

**Tabelle 6. Eigenschaften und Brandverhalten nach UL 94-HBF der Schaumstoffformteile**

| | | Dichte | Dicke | Brandergebnis | | |
|---|---|---|---|---|---|---|
| | | [kg/m³] | [mm] | | Nachbrennzeit [s] | Brennstrecke [mm] |
| 9a | MG1 | 50 | 13,0 | selbstverlöschend | 0 | 25 |
| 9b | MG1 | 60 | 13,0 | selbstverlöschend | 0 | 27 |
| 9c | MG1 | 70 | 13,0 | selbstverlöschend | 0 | 28 |
| 10 | MG2 | | 13,0 | | | |
| 11 | MG3 | | 13,0 | | | |
| V20 | MG4 | 70,0 | 13,0 | nicht selbstverlöschend | 0 | 60 mm Markierungerreicht |

## Patentansprüche

1. Verfahren zur Herstellung von Polyolefinschaumstoffpartikeln umfassend die Schritte:
(a) Bereitstellen von Granulaten aus einer Formmasse, enthaltend
a) 78 bis 98,9 Gew.-% mindestens eines Polyolefin P,
b) 1 bis 10 Gew.-% mindestens einer organischen Phosphorverbindung als Flammschutzmittel FR,
c) 0,1 bis 2 Gew.-% mindestens einer sterisch gehinderten Nitroxylverbindung als Flammschutzsynergisten S,
d) 0 bis 10 Gew.-% ein oder mehrerer Additive A,
wobei die Summe der Komponenten a) bis d) 100 Gew.-% ergeben,
(b) Herstellung einer wässrigen Suspension aus den Granulaten aus Stufe (a),
(c) Imprägnieren der Granulate mit mindestens einem flüchtigen Treibmittel in einem Kessel unter Druck,
(d) Entspannen der in Stufe (c) imprägnierten Granulate und Isolieren der Polyolefin-schaumstoffpartikel.

2. Verfahren nach Anspruch 1, **dadurch gekennzeichnet, dass** die Formmasse
a) 83,5 bis 97 Gew.-% mindestens eines Polyolefin P,
b) 2,5 bis 5 Gew.-% mindestens einer organischen Phosphorverbindung als Flammschutzmittel FR,
c) 0,5 bis 1,5 Gew.-% mindestens einer sterisch gehinderten Nitroxylverbindung als Flammschutzsynergisten S,
d) 0 bis 10 Gew.-% ein oder mehrerer Additive A,
wobei die Summe der Komponenten a) bis d) 100 Gew.-% ergeben, enthält.

3. Verfahren nach Anspruch 1 oder 2, **dadurch gekennzeichnet dass**, das Polyolefin P ein Polypropylen-Homo- oder Copolymer ist.

4. Verfahren nach einem der Ansprüche 1 bis 3, **dadurch gekennzeichnet, dass** das Flammschutzmittel FR ein organisches Phoshat, Phosphonat, Phosphinat, Phosphinoxid, Phosphin oder Phosphit ist.

5. Verfahren nach einem der Ansprüche 1 bis 4, **dadurch gekennzeichnet, dass** der Flammschutzsynergist S ein Reaktionsprodukt aus 2,4-bis[(1-cyclohexyloxy-2,2,6,6-piperidin -4-yl)butylamino]-6-chloro-s-triazine mit N,N'-bis (3-aminopropyl)ethylendiamine ist.

6. Verfahren nach einem der Ansprüche 2 bis 5, **dadurch gekennzeichnet, dass** das Gewichtsverhältnis von Flammschutzmittel FR zu Flammschutzsynergist S im Bereich von 1:1 bis 10:1 liegt.

7. Verfahren nach einem der Ansprüche 1 bis 6, **dadurch gekennzeichnet, dass** die Formmasse 0,1 bis 5 Gew.-% Ruß oder Graphit als Additiv A enthält.

8. Verfahren nach einem der Ansprüche 1 bis 7, **dadurch gekennzeichnet, dass** das Flammschutzmittel FR ein Feststoff mit einem Schmelzpunkt oder Zersetzungspunkt von mindestens 150°C ist.

9. Polyolefinschaumstoffpartikel, erhältlich nach dem Verfahren gemäß einem der Ansprüche 1 bis 8.

10. Polyolefinschaumstoffpartikel nach Anspruch 9, **dadurch gekennzeichnet, dass** sie eine Schüttdichte von 10 bis 300 kg/m³ aufweisen.

11. Schaumstoffformteile, erhältlich durch Verschweißen der Polyolefinschaumstoffpartikel nach Anspruch 9 oder 10.

## Claims

1. A process for the production of polyolefin foam beads comprising the following steps:
(a) provision of pellets made of a molding composition comprising
a) from 78 to 98.9% by weight of at least one polyolefin P,
b) from 1 to 10% by weight of at least one organic phosphorus compound as flame retardant FR,
c) from 0.1 to 2% by weight of at least one sterically hindered nitroxyl compound as flame retardant synergist S,
d) from 0 to 10% by weight of one or more additives A,
where the entirety of components a) to d) gives 100% by weight,
(b) production of an aqueous suspension from the pellets from stage (a),
(c) impregnation of the pellets with at least one volatile blowing agent in a tank under pressure,
(d) depressurization of the pellets impregnated in stage (c) and isolation of the polyolefin foam beads.

2. The process according to claim 1, wherein the molding composition comprises
a) from 83.5 to 97% by weight of at least one polyolefin P,
b) from 2.5 to 5% by weight of at least one organic phosphorus compound as flame retardant FR,
c) from 0.5 to 1.5% by weight of at least one sterically hindered nitroxyl compound as flame retardant synergist S,
d) from 0 to 10% by weight of one or more additives A,
where the entirety of components a) to d) gives 100% by weight.

3. The process as claimed in claim 1 or 2, wherein the polyolefin P is a homo- or copolypropylene.

4. The process according to any of claims 1 to 3, wherein the flame retardant FR is an organic phosphate, phosphonate, phosphinate, phosphine oxide, phosphine, or phosphite.

5. The process according to any of claims 1 to 4, wherein the flame retardant synergist S is a reaction product of 2,4-bis[(1-cyclohexyloxy-2,2,6,6-piperidin-4-yl)butyl-amino]-6-chloro-s-triazine with N,N'-bis(3-aminopropyl)-ethylenediamines.

6. The process according to any of claims 2 to 5, wherein the ratio by weight of flame retardant FR to flame retardant synergist S is in the range from 1:1 to 10:1.

7. The process according to any of claims 1 to 6, wherein the molding composition comprises from 0.1 to 5% by weight of carbon black or graphite as additive A.

8. The process according to any of claims 1 to 7, wherein the flame retardant FR is a solid with a melting point or decomposition point of at least 150°C.

9. A polyolefin foam bead obtainable by the process according to any of claims 1 to 8.

10. The polyolefin foam bead according to claim 9, wherein the polyolefin foam bead has a bulk density of from 10 to 300 kg/m³.

11. A foam molding obtainable by fusing the polyolefin foam beads according to claim 9 or 10.

## Revendications

1. Procédé pour la production de particules de mousse de polyoléfine, comprenant les étapes :
(a) disposition de granulés à base d'une matière à mouler, contenant
a) 78 à 98,9 % en poids d'au moins une polyoléfine P,
b) 1 à 10 % en poids d'au moins un composé de phosphore organique en tant qu'agent ignifuge FR,
c) 0,1 à 2 % en poids d'au moins un composé nitroxyle à empêchement stérique, en tant qu'agent synergique ignifuge S,
d) 0 à 10 % en poids d'un ou de plusieurs additifs A,
la somme des composants a) à d) étant égale à 100 % en poids,
(b) préparation d'une suspension aqueuse à partir des granulés de l'étape (a),
(c) imprégnation des granulés avec au moins un agent porogène fluide, dans une cuve sous pression,
(d) détente des granulés imprégnés dans l'étape (c) et isolement des particules de mousse de polyoléfine.

2. Procédé selon la revendication 1, **caractérisé en ce que** la matière à mouler contient
a) 83,5 à 97 % en poids d'au moins une polyoléfine P,
b) à 5 % en poids d'au moins un composé de phosphore organique en tant qu'agent ignifuge FR,
c) 0,5 à 1,5 % en poids d'au moins un composé nitroxyle à empêchement stérique, en tant qu'agent synergique ignifuge S,
d) 0 à 10 % en poids d'un ou de plusieurs additifs A, la somme des composants a) à d) étant égale à 100 % en poids.

3. Procédé selon la revendication 1 ou 2, **caractérisé en ce que** la polyoléfine P est un homopolymère polypropylène ou copolymère de polypropylène.

4. Procédé selon l'une quelconque des revendications 1 à 3, **caractérisé en ce que** l'agent ignifuge FR est un(e) phosphate, phosphonate, phosphinate, oxyde de phosphine, phosphine ou phosphite, organique.

5. Procédé selon l'une quelconque des revendications 1 à 4, **caractérisé en ce que** l'agent synergique ignifuge S est un produit de réaction de 2,4-bis[(1-cyclohexyloxy-2,2,6,6-pipéridin-4-yl)butyl-amino]-6-chloro-s-triazines avec des N,N'-bis(3-amino-propyl)éthylènediamines.

6. Procédé selon l'une quelconque des revendications 2 à 5, **caractérisé en ce que** le rapport pondéral de l'agent ignifuge FR à l'agent synergique ignifuge S se situe dans la plage de 1:1 à 10:1.

7. Procédé selon l'une quelconque des revendications 1 à 6, **caractérisé en ce que** la matière à mouler contient comme additif A de 0,1 à 5 % en poids de noir de carbone ou graphite.

8. Procédé selon l'une quelconque des revendications 1 à 7, **caractérisé en ce que** l'agent ignifuge FR est un solide ayant un point de fusion ou point de décomposition d'au moins 150 °C.

9. Particules de mousse de polyoléfine, pouvant être obtenues conformément au procédé selon l'une quelconque des revendications 1 à 8.

10. Particules de mousse de polyoléfine selon la revendication 9, **caractérisées en ce qu'**elles présentent une masse volumique apparente de 10 à 300 kg/m³.

11. Pièces moulées en mousse, pouvant être obtenues par soudure des particules de mousse de polyoléfine selon la revendication 9 ou 10.
